Europäisches Patentamt

(19) European Patent Office

Office européen des brevets

(11) Publication number: 0 165 589
A2

# (12) EUROPEAN PATENT APPLICATION

(21) Application number: 85107493.0

(22) Date of filing: 18.06.85

(51) Int. Cl.⁴: **H 01 M 10/40**
H 01 M 4/58, H 01 M 4/96

(30) Priority: 22.06.84 JP 127473/84

(43) Date of publication of application:
27.12.85 Bulletin 85/52

(84) Designated Contracting States:
CH DE FR GB IT LI NL SE

(71) Applicant: HITACHI, LTD.
6, Kanda Surugadai 4-chome Chiyoda-ku
Tokyo 100(JP)

(72) Inventor: Toyama, Atsuko
6-7-6-403, Omika-cho
Hitachi-shi Ibaraki-ken(JP)

(72) Inventor: Fujita, Kazunori
2650-24, Muramatsu Tokai-mura
Naka-gun Ibaraki-ken(JP)

(72) Inventor: Nishimura, Shigeoki
2577-87, Higashiishikawa
Katsuta-shi Ibaraki-ken(JP)

(72) Inventor: Sugimoto, Hiroyuki
2-20-1, Mizuki-cho
Hitachi-shi Ibaraki-ken(JP)

(72) Inventor: Ebato, Noboru
Okubo-cho
Hitachi-shi Ibaraki-ken(JP)

(72) Inventor: Matsuda, Shinpei
1722-7, Shirakata Tokai-mura
Naka-gun Ibaraka-ken(JP)

(74) Representative: Strehl, Schübel-Hopf, Schulz
Widenmayerstrasse 17 Postfach 22 03 45
D-8000 München 22(DE)

(54) Secondary battery and method of manufacturing the same.

㊽ The anode (2) and cathode (4) of a secondary battery are constructed by assembling graphite in its form. By employing the graphite as the starting material of the manufacture of the battery in this manner, the disintegration of the electrodes during the manufacture can be prevented. The battery thus manufactured exhibits battery function once it is charged and thenceforth, each time discharge and charge is repeated, the electrodes switch between the states of the graphite and graphite interlayer compounds owing to their reactions with ions and release of the ions, so that a high battery performance is achieved.

FIG. 1

## Title of the Invention

Secondary Battery and Method of Manufacturing the Same

## Background of the Invention

The present invention relates to a method of manufacturing a secondary battery and the manufactured secondary battery, and more particularly to the structure and fabricating method of an anode as well as a cathode.

In secondary batteries, it is known to construct an anode or a cathode by the use of a compound having a lamellar structure or a graphite interlayer compound.

For example, the official gazette of Japanese Patent Application Laying-open No. 58-102464 discloses a secondary battery which employs a lithium – graphite interlayer compound as the active material of a cathode, an $FeCl_2$ – graphite interlayer compound as the active material of an anode, and a solid electrolyte. In this battery, lithium ions are emitted from the cathode and $FeCl_2$ from the anode in the mode of discharge. The reverse reaction takes place in the mode of charge. Besides, an initial open-circuit voltage of 3.5 volts, an average open-circuit voltage of 3.3 volts and an average load current of 14 $\mu$A are attained in the mode of discharge. In the cited invention, however, the graphite interlayer compound which is prone to disintegrate when it contains moisture is used as the starting material in the manufacture of the secondary battery, so that care needs to be taken for the custody and handling of the graphite interlayer compound before being assembled into a battery envelope.

In batteries which employ organic electrolytes, one employing carbon for both an anode and a cathode is also known. For example, a chargeable capacitor battery employing active carbon fiber electrodes is reported in J. Chem. Soc., Chem. Commun., page 1158 (1982). However, the charging and discharging reactions of this battery are based on the adsorption and desorption reactions of the electrolyte, and no graphite interlayer compound is formed.

Summary of the Invention

An object of the present invention is to provide a method of manufacturing a secondary battery which is free from the care of handling at the time of the manufacture and which has a battery performance equivalent or superior to that of a battery employing a graphite interlayer compound as a starting material for manufacture, and the secondary battery manufactured by the method.

The present invention is characterized in that graphite which forms interlayer compounds by reacting with the anions and cations of an electrolyte respectively in the mode of charge is employed for an anode and a cathode, and that the graphite in its form before producing the interlayer compounds is assembled into a battery envelope. According to the present invention, a secondary battery can be constructed in that state of graphite which is difficult to be integrated by moisture. After the construction, a performance as the battery can be demonstrated since charging, whereupon the performance as the battery can be demonstrated while both the anode and the cathode are switching between the states of the graphite and the interlayer compounds, so that a high battery performance can be ensured. In the sense that the electrodes are not disintegrated, the battery of the invention can be said higher in performance than a battery which is constructed in the states of graphite interlayer compounds from the beginning.

In the secondary battery of the present invention, during charge, the reaction in which the graphite and the anions of the electrolyte react to form the graphite interlayer compound occurs at the anode, while the reaction in which the graphite and the cations of the electrolyte react to form the graphite interlayer compound occurs at the cathode. During discharge, the reaction occurs in which the anions being the intercalary material of the graphite interlayer compound of the anode and the cations being the intercalary material of the graphite interlayer compound of the cathode migrate toward the electrolyte to turn graphite of lamellar structure.

In order to perform such reactions repeatedly every charge and discharge, it is necessary to mix the electrolyte with an organic solvent, for example, to dissolve the electrolyte in the solution of propylene carbonate being the organic solvent. There is also the effect that, although the graphite interlayer compound produced in the mode of charge disintegrates upon contact with water, it does not disintegrate upon contact with the organic solvent.

Further, the stable potential width of the organic solvent is greater than that of water (the theoretical decomposition voltage of water is 1.23 V), for example, the stable potential width of propylene carbonate is as sufficiently great as $-3.3$ V to 1.5 V (vs $Ag/Ag^+$) in case of using a platinum plate as an electrode and the electrolyte in which $LiClO_4$ is dissolved at a concentration of 1 mol/L so that the battery employing the electrolyte of the organic solvent is stable even at a high voltage.

In the present invention, the battery should desirably have a sealed structure in order to prevent the graphite interlayer compounds from coming into contact with moisture in the atmosphere.

(a) Construction of Anode and Cathode

An anode or a cathode is constructed of graphite which forms an interlayer compound by reacting with the anions or cations of an electrolyte in the mode of charge.

As such graphite, there is, for example, one which is obtained by once preparing the graphite interlayer compound and then removing an intercalary material therefrom or one which is put into a lamellar structure so that the graphite interlayer compound can be formed. Besides, there is a chemical method wherein graphite and lithium metal are enclosed in a pyrex glass tube under vacuum and are heated to form the graphite interlayer compound. It is of course possible to use the graphite produced by removing the intercalary material from the graphite interlayer compound obtained by the chemical method.

As expedients for producing the graphite having the lamellar structure, all well-known methods are applicable. For example, it is possible to apply a method which bakes carbon powder at or above 2000 °C or a method which utilizes a plasma to produce the graphite.

Regarding the shape of the graphite, the form of a sheet such as carbon paper is the most suitable. As the graphite itself, a fibrous one is desirable because the surface area of an electrode can be rendered large, but a sheet-like one obtained by molding powder may well be used.  Especially as the graphite for the anode,
one is recommended which is obtained in such a way that
the graphite prepared by removing the intercalary material
of an interlayer compound once formed is molded into
the shape of a sheet by press work or the like.

The anode and the cathode may well be constructed
of only the graphite, or the graphite may well be supported
by a supporting member such as nickel plate.

(b) Electrolyte

In an electrolyte, $Li^+$ is desirable as an example
of the cation of an electrolytic substance, but the
ion of an alkali metal such as $Na^+$, $K^+$, $Rb^+$ or $Cs^+$
and also a quaternary ammonium ion such as $(CH_3)_4N^+$,
$(C_2H_5)_4N^+$, $(C_3H_7)_4N^+$ or $(C_4H_9)_4N^+$ can be used by way
of example.  Examples of anions are $ClO_4^-$, $BF_4^-$, $AlCl_4^-$,
$AsF_6^-$, $PF_6^-$, $SCN^-$, $SbF_6^-$, $NbF_6^-$ and $TaF_6^-$.  At least
one sort of these electrolytic substances is dissolved
in an organic solvent, and the resulting solution is
used as the electrolyte.

Well suitable as the organic solvent of the electrolyte
is a substance which is inactive to the electrodes and
other constituent materials, which dissolves the electrolytic
substance to afford a high electric conductivity and
which is not disintegrated even by charge and discharge.
Propylene carbonate is the most suitable as the substance which satisfies such properties. Besides, it is possible to employ one solvent, or a mixed solvent consisting of at least two, selected from among tetrahydrofuran, $\gamma$-butyrolactone, 1, 2-dimethoxyethane, dioxane, dichloroethane, 1, 2-dichloroethane, N, N-dimethylformamide, dimethyl sulfoxide, dimethyl sulfite, ethylene carbonate, 1, 3-dioxolane, nitromethane, formamide, 2-methyl tetrahydrofuran, sulfolan, etc.

Since, in the secondary battery of the present invention, both the anode and the cathode are constructed of the graphite which forms the graphite interlayer compounds in the mode of charge, the precipitation of a metal does not occur on the electrodes. In a discharge experiment on the secondary battery of the present invention, it has been ascertained that an average load current in excess of 2 mA is attained.

Brief Description of the Drawings

Fig. 1 is a sectional view showing the structure of a unit cell which is an embodiment of the present invention;

Fig. 2 is a sectional view of a layer-built cell;

Fig. 3 is a cyclic voltamgram in the case of employing graphite for an electrode;

Fig. 4 is a sectional view of an experimental cell; and

Fig. 5 is a characteristic diagram showing the relationships between the numbers of the charging and discharging cycles and the Coulomb efficiencies of batteries.

Detailed Description of the Preferred Embodiments

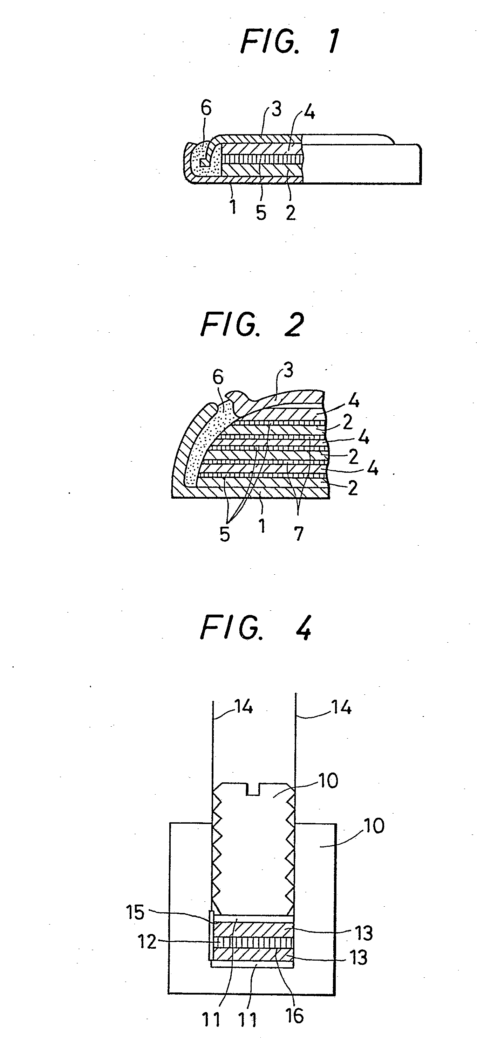

Fig. 1 shows an example of the structure of the secondary battery of the present invention. Numeral 1 designates an anode armor which is electrically connected with an anode 2, numeral 3 a cathode armor which is electrically connected with a cathode 4, numeral 5 a separator, and numeral 6 an insulator. While Fig. 1 illustrates the structure of a unit cell including the anode, cathode and separator, a layer—built cell in which a plurality of unit cells are stacked can also be fabricated. Fig. 2 shows an example of the structure of the layer—built cell. Numeral 7 indicates conductive base members, which separate the cells and which couple the anodes and the cathodes. The number of the stacked layers is arbitrary. The separator 5 contains an organic solvent and an electrolyte. By way of example, it is made of the unwoven fabric of polypropylene impregnated with a solution in which $LiClO_4$ is dissolved in propylene carbonate. The electrolyte exists also within and around the electrodes.

Example 1:

Doping and undoping in the secondary battery of the present invention were ascertained by a method to be described below. Electrochemical behaviors were investigated by potential scanning at positive and negative potentials as to an example wherein an active electrode was graphite in the form of a sheet having a bulk density of 0.97 $g/cm^3$, the graphite sheet being obtained in such a way that graphite powder the lattice constant of which was found 0.335 nm by X-ray diffraction and the primary particle diameter of which evaluated from the half width of the peak thereof was 19.4 nm was pressed to a thickness of 220 µm; a platinum plate was used as a counter electrode; and an $Ag/Ag^+$ electrode was used as a reference electrode, and wherein an electrolyte used was a solution in which $LiClO_4$ was dissolved in propylene carbonate at a concentration of 1 mol/lit.

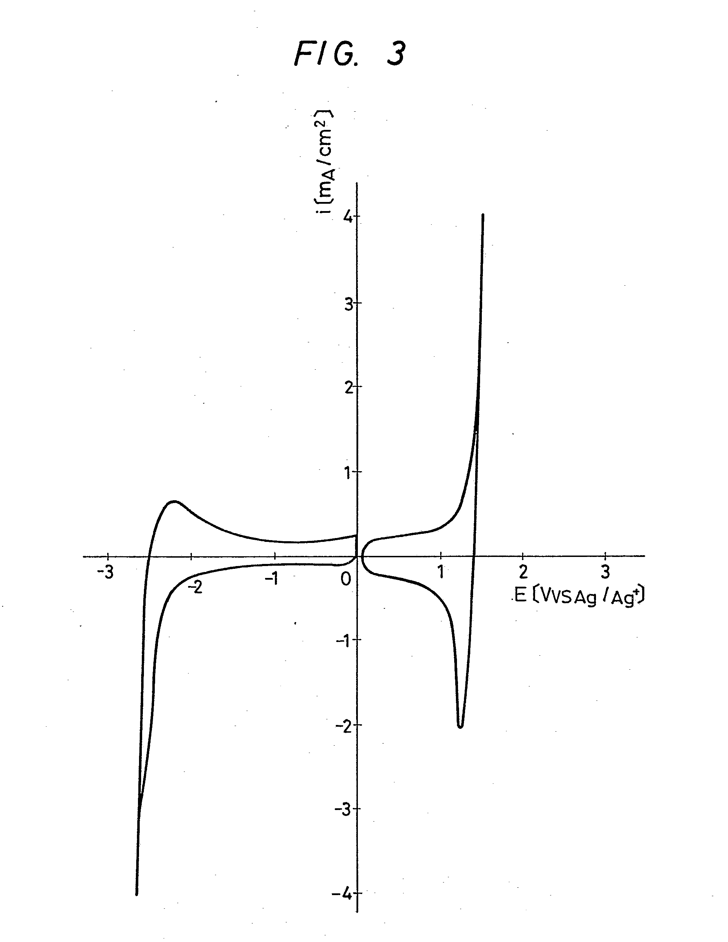

The potential scanning rate was 1 mV/sec, and the resulting cyclic voltamgram is shown in Fig. 3. At the negative potentials, current flowing in the minus direction corresponds to a case where the graphite is doped with $Li^+$ to become an interlayer compound, while current flowing in the plus direction corresponds to a case where $Li^+$ having formed the interlayer compound of the graphite is released from the graphite by undoping. The potential at which the doping starts is −2.2 V (vs $Ag/Ag^+$) which is positive with respect to the potential at which $Li^+$ is reduced into Li metal, and it has been electrochemically confirmed that the electrodeposition of Li does not take place on the graphite. The Coulomb efficiency is 51 %. On the other hand, at the positive potentials, current flowing in the plus direction corresponds to a case where carbon is doped with $ClO_4^-$ to become an interlayer compound, while current flowing in the minus direction corresponds to a case where $ClO_4^-$ having formed the interlayer compound is released from the graphite by undoping. The doping starting potential is +1.1 V (vs $Ag/Ag^+$), and it is negative with respect to the potential at which $ClO_4^-$ is oxidized. The Coulomb efficiency is 77 %. These indicate that $Li^+$ and $ClO_4^-$ are readily intercalated between the layers of the graphite (doping) and are readily released from the graphite (undoping). Since the stable potential width of the electrolyte on the platinum electrode is as sufficiently great as —3.3 to +1.5 V (vs $Ag/Ag^+$), the disintegration of the electrolyte is not involved.

Example 2:

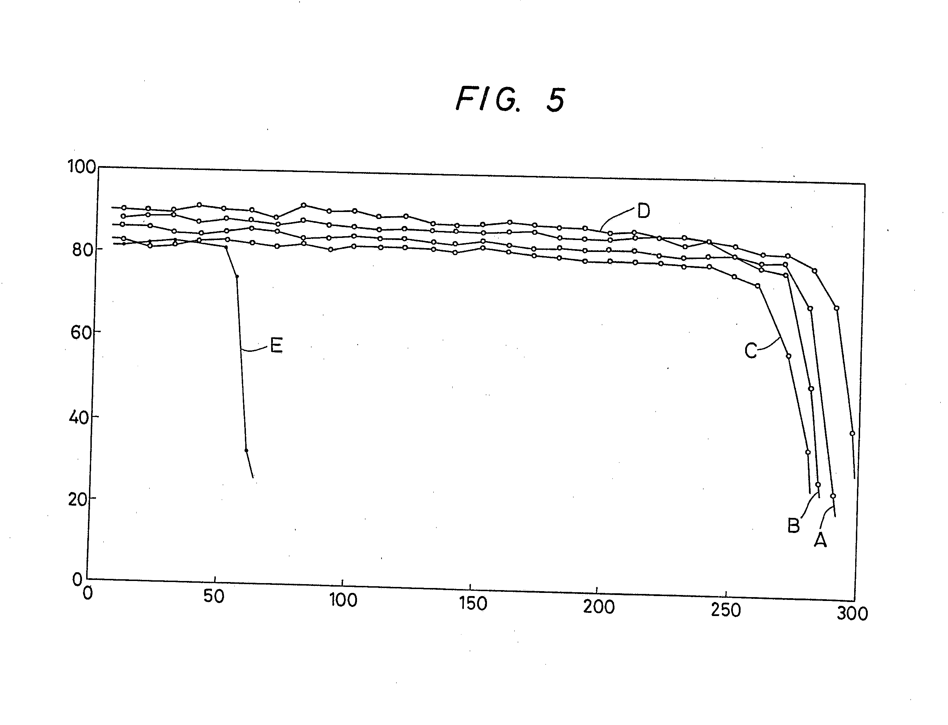

A battery shown in Fig. 4 was assembled using an anode and a cathode each of which was made of graphite in the form of a sheet having a bulk density of 0.97 $g/cm^3$ and a diameter of 10 mm, the graphite sheet being obtained in such a way that graphite powder the lattice constant of which was found 0.335 nm by X-ray diffraction and the primary particle diameter of which evaluated
from the half width of the peak thereof was 19.4 nm was
pressed to a thickness of 220 µm, and also using an
electrolyte which was a solution wherein $LiClO_4$ was
dissolved in propylene carbonate at a concentration
of 1 mol/l.

Fig. 4 is a sectional view of an experimental unit
cell. The battery is constructed of a cell 10 made
of teflon, collectors 11 made of platinum, a separator
12, electrodes 13, electrode terminals 14 and an insulator
15, and an electrolyte 16 was contained in the teflon
cell to impregnate all of the electrodes, the collectors
etc. The charging and discharging current densities
were 0.1 $mA/cm^2$, the charge was conducted for 30 minutes,
and the discharge was conducted until the battery voltage
became 1 V. The relationship between the numbers of
charging and discharging cycles and the Coulomb efficiency
is indicated as a curve A in Fig. 5. The open-circuit
voltage after the charge was 3.7 V, and the ratio between
the quantity of electricity during the charge and the
quantity of electricity during the discharge, namely,
the Coulomb efficiency was 90 % at the initial stage.
The Coulomb efficiency in the charge and discharge of
the 290th cycle was 24 %.

Example 3:

Using the same constituents as in Example 2 except the electrolyte, the battery shown in Fig. 4 was assembled. Used as the electrolyte was a solution in which $(C_2H_5)_4NBF_4$ was dissolved in propylene carbonate at a concentration of 1 mol/l. The charging and discharging conditions of the battery were similar to those in Example 1. The relationship between the numbers of charging and discharging cycles and the Coulomb efficiency is indicated at a curve B in Fig. 5. The open-circuit voltage of this battery after the charge was 3.7 V. The Coulomb efficiency at the initial stage of the charging and discharging cycles was 85 %, and that at the 270th cycle was 50 %.

Example 4:

Likewise to Example 3, the battery shown in Fig. 4 was assembled using the same constituents as in Example 2 except the electrolyte. Used as the electrolyte was a solution in which $LiBF_4$ was dissolved in tetrahydrofuran at a concentration of 1 mol/l. As the charging and discharging conditions of the battery, the current density was 2 mA/cm$^2$, the charging period of time was 90 seconds, and the discharge was conducted down to 1 V. The relationship between the numbers of charging and discharging cycles and the Coulomb efficiency is indicated as a curve C in Fig. 5. The open-circuit voltage of this battery after the charge was 3.5 V. The Coulomb efficiency at the initial stage of the charging and discharging cycles was 83 %, and that of the 270th cycle was 58 %.

Example 5:

The battery shown in Fig. 4 was assembled using a cathode which was made of carbon paper 10 mm in diameter, the lattice constant of which was found 0.337 nm by X-ray diffraction and the primary particle diameter of which was 48.6 nm, and an anode which was made of graphite molded into the form of a sheet 10 mm in diameter, the graphite sheet being obtained in such a way that the graphite with an intercalary material removed from an interlayer compound once formed was pressed. The graphite used for the anode was found on the basis of X-ray diffraction to have a lattice constant of 0.335 nm and a primary particle diameter of 19.4 nm. Used as an electrolyte was a solution in which $LiBF_4$ was dissolved in propylene carbonate at a concentration of 1 mol/L. The charging and discharging conditions of the battery were similar to those of Example 2. The relationship between the numbers of charging and discharging cycles and the Coulomb efficiency is indicated by a curve D in Fig. 5. The open-circuit voltage of this battery after the charge was 3.7 V. The Coulomb efficiency at the initial stage of the charging and discharging cycles was 87 %, and that of the 298th cycle was 40 %.

Comparative Example 1:

The battery shown in Fig. 4 was assembled using a cathode made of lithium, an anode made of graphite which was found by X-ray diffraction to have a lattice constant of 0.337 nm and a primary particle diameter of 19.4 nm, and an electrolyte made of a solution in which $LiClO_4$ was dissolved in propylene carbonate at a concentration of 1 mol/l. With a current density of 0.1 $mA/cm^2$, the charge was conducted for 30 minutes, and the discharge was conducted until the battery voltage became 2 V. A curve E in Fig. 5 shows the numbers of charging and discharging cycles and the Coulomb efficiency.

The open-circuit voltage of this battery after the charge was 3.5 V. Although the Coulomb efficiency of the charging and discharging cycles at the initial stage was 82 %, that of the 60th cycle was 32 %. The lowering of the Coulomb efficiency is attributed to the short-circuit between the electrodes.

Comparative Example 2:

A battery shown in Fig. 4 was assembled using a cathode and an anode each being made of active carbon (specific surface area: 850 $m^2/g$) which was pressed to a thickness of 360 μm to prepare a sheet having a bulk density of 1.13 $g/cm^3$ and a diameter of 10 mm, and an electrolyte being a solution in which $LiClO_4$

was dissolved in propylene at a concentration of 1.0 mol/l. With a current density of 0.1 mA/cm$^2$, the charge was carried out for 30 minutes, and the discharge was carried out until the battery voltage became 1 V. The Coulomb efficiency of this battery was 22 % even at the initial stage, and a satisfactory battery performance was not attained.

As described above in detail, the secondary battery of the present invention has an anode and a cathode constructed so as to form graphite interlayer compounds in the mode of charge and to return into the original form of graphite in the mode of discharge. In assembling the battery, the graphite which is not in the state of the graphite interlayer compound can be assembled, so that the handling is easy.

Moreover, high Coulomb efficiencies in charge and discharge are exhibited for a long period of time, and the battery lifetime is long.

Claims:

1. A method of manufacturing a secondary battery wherein an organic solvent and an electrolyte are interposed between an anode (2) and a cathode (4),

c h a r a c t e r i z e d   in that said anode (2) and cathode (4) are made of graphite which produces interlayer compounds by reacting with anions and cations of said electrolyte respectively during charge, and that the graphite in a form before producing the interlayer compounds is assembled into a battery envelope (1, 3).

2. The method of claim 1, wherein the graphite of said anode (2) and/or said cathode (4) is fibrous or powdery graphite which is baked at a temperature of at least 2000°C and which is thereafter molded into a predetermined shape.

3. The method of claim 2, wherein after the baking, the graphite is press-molded into the form of a sheet.

4. A method of manufacturing a secondary battery wherein an organic solvent and an electrolyte are interposed between an anode (2) and a cathode (4),

c h a r a c t e r i z e d   in that said anode (2) and cathode (4) are made of graphite which produces interlayer compounds by reacting with anions and cations of said electrolyte respectively during charge, and that the interlayer compounds once produced have intercalary
materials removed therefrom and are assembled into a battery
envelope (1, 3) in those states.

5. The method of claim 4, wherein said intercalary material
is formed by the anions or cations of said electrolyte.

6. The method of claim 4 or 5, wherein after the removal of
the intercalary material, the interlayer compound is press-
molded into the form of a sheet.

7. The method of any of claims 1 and 4 to 6, wherein the
graphite is fibrous or powdery graphite.

8. The method of any of claims 1 to 7, wherein the cations
of said electrolyte are ions of an alkali metal or quaternary
ammonium ions.

9. The method of any of claims 1 to 8, wherein the anions of
said electrolyte are halogen ions or halogen compound ions.

10. The method of any of claims 1 to 9, wherein said anode
and/or said cathode is in the form of a sheet.

11. The method of any of claims 1 to 10, wherein said organic
solvent is propylene carbonate.

PS/bi

0165589

## FIG. 1

## FIG. 2

## FIG. 4

# FIG. 3

# FIG. 5